# EUROPÄISCHE PATENTSCHRIFT

(11) **EP 0 529 347 B1**
(45) Veröffentlichungstag und Bekanntmachung des Hinweises auf die Patenterteilung: **24.05.1995**
(21) Anmeldenummer: 92113172.8
(22) Anmeldetag: 03.08.1992
(51) Int. Cl.: E03C 1/06

(54) **Wandbrausehalter**
Wall-shower holder
Support de douche mural

(30) Priorität: 30.08.1991 DE 4128831
(43) Veröffentlichungstag der Anmeldung: 03.03.1993
(73) Patentinhaber: FRIEDRICH GROHE AKTIENGESELLSCHAFT, D-58675 Hemer (DE)
(72) Erfinder: Heimann, Bruno, W-5758 Fröndenberg-Ardey (DE); Frankholz, Christian, W-5840 Schwerte (DE)

(56) Entgegenhaltungen:
- DE-A- 2 844 190
- DE-A- 3 506 120
- DE-A- 3 507 290

## Beschreibung

Die Erfindung bezieht sich auf einen Wandbrausehalter mit einer an einer Wand befestigbaren Konsole, an der ein Handbrauseablageteil um eine Achse begrenzt verschwenkbar vorgesehen ist, derart, daß mit einem drehfest an der Konsole angeordneten Bolzen und einer Feststellmutter das Ablageteil gehalten und die Schwergängigkeit des Verschwenkvorgangs einstellbar ist.
Eine derartige Vorrichtung ist aus der DE-PS 28 44 190 bekannt. Das Handbrauseablageteil steht hierbei parallel zur Konsole an der Gebäudewand vor. Die Handbrausesteckaufnahme beschreibt bei dem Verschwenkvorgang einen relativ großen Bogen.

Der Erfindung liegt die Aufgabe zugrunde, die im Oberbegriff des Anspruchs 1 angegebene Vorrichtung so auszubilden, daß die Handbrausesteckaufnahme des Ablageteils sich auf der Schwenkachse befindet.
Diese Aufgabe wird erfindungsgemäß dadurch gelöst, daß in der Konsole eine Durchgangsöffnung parallel zur Wand für eine drehfest aber axial verschiebbare Aufnahme des Bolzens vorgesehen ist, wobei einerseits die Feststellmutter auf dem Bolzen gegen eine Stirnseite der Konsole und andererseits der Bolzen mit einem radial vorstehenden Kragen das Ablageteil gegen eine an der anderen Stirnseite ausgebildete Gleitfläche drückt.
Weitere Ausgestaltungen der Erfindung sind in den Ansprüchen 2 bis 7 angegeben.

Ein Ausführungsbeispiel der Erfindung ist in der Zeichnung dargestellt und wird im folgenden näher beschrieben. Es zeigt
- Figur 1: einen Wandbrausehalter in Seitenansicht, teilweise im Schnitt, an einer Gebäudewand montiert;
- Figur 2: den in Figur 1 gezeigten Wandbrausehalter in der Schnittebene II;
- Figur 3: die in Figur 1 gezeigte Konsole in Seitenansicht, teilweise geschnitten;
- Figur 4: die Konsole gemäß Figur 3 in der Schnittebene IV;
- Figur 5: das in Figur 1 gezeigte Handbrauseablageteil im Seitenschnitt;
- Figur 6: das Ablageteil gemäß Figur 5 um 90^{o} gedreht;
- Figur 7: das in Figur 2 gezeigte Federelement in Draufsicht;
- Figur 8: das Federelement gemäß Figur 7 im Seitenschnitt;
- Figur 9: den in Figur 2 gezeigten Bolzen im Längsschnitt;
- Figur 10: den Bolzen gemäß Figur 9 in Draufsicht;
- Figur 11: die in Figur 2 gezeigte Feststellmutter in Draufsicht;
- Figur 12: die Feststellmutter gemäß Figur 1 im Seitenschnitt.

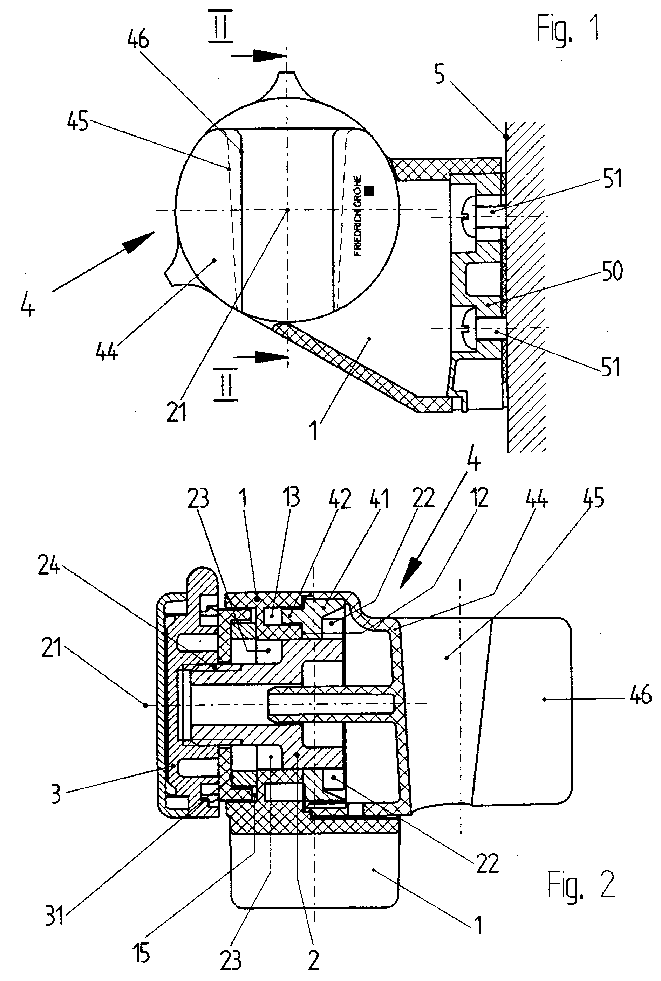

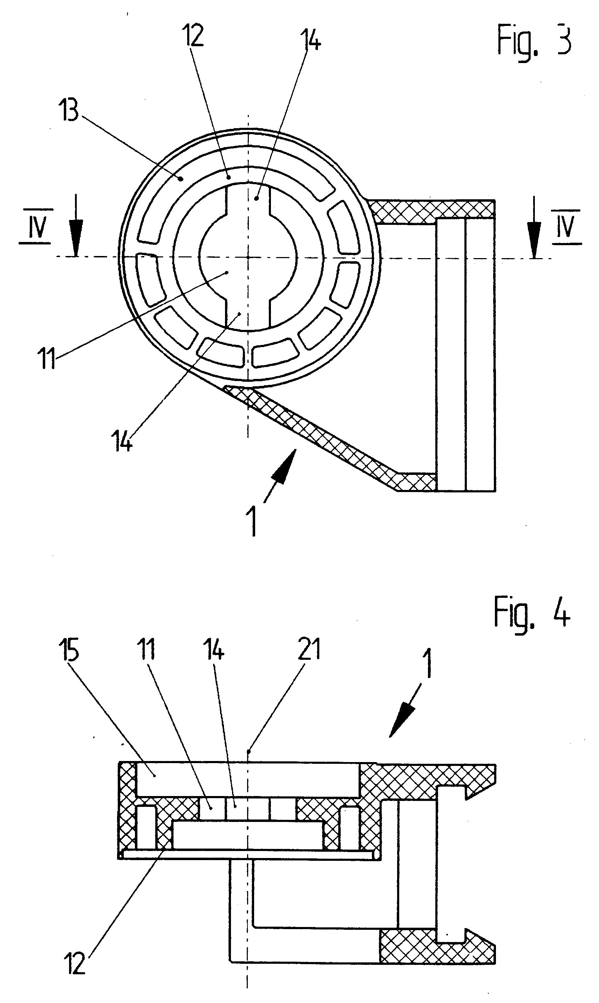

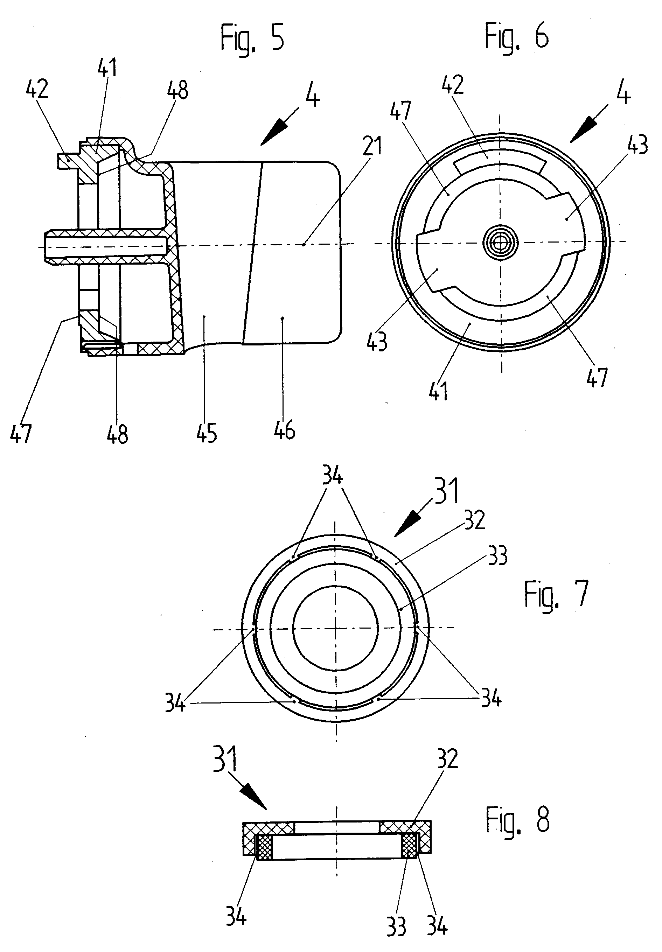

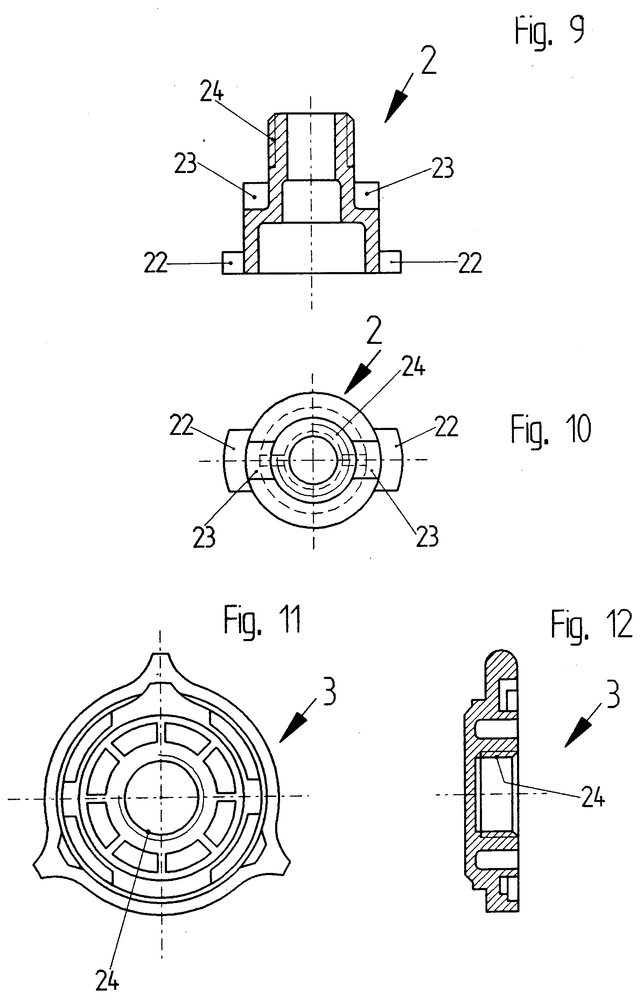

Der Wandbrausehalter wird an einer Wand 5 eines Gebäudes etc. mit Hilfe einer Grundplatte 50 und Dübelschrauben 51 befestigt. Auf die Grundplatte 50 wird hierbei parallel zur Wand 5 eine Konsole 1 aufgeschoben und in der Stecklage mit Hilfe einer federnden Zunge 52 verrastet.
Parallel zur Oberfläche der Wand 50 ist im vorstehenden Bereich der Konsole 1 eine Durchgangsöffnung 11 auf einer Achse 21 angeordnet, wie es insbesondere aus den Figuren 3 und 4 der Zeichnung zu entnehmen ist. In der Durchgangsöffnung 11 sind diametral gegenüberliegend zwei Nuten 14 zur drehfesten Halterung eines Bolzens 2 angeordnet. Konzentrisch zur Achse 21 ist außerdem an der einen Stirnseite eine Ringsegmentnut 13 zur Aufnahme eines am Ablageteil 4 für die Handbrause ausgebildeten, axial vorstehenden Ringsegments 42 vorgesehen, so daß hiermit die Schwenkbewegung des Ablageteils 4 um die Achse 21 begrenzt ist. Außerdem ist eine Gleitfläche 12 an der Stirnseite ausgebildet zur Anlage eines Ringelements 41 des Ablageteils 4. An der gegenüberliegenden Stirnseite der Konsole 1 ist konzentrisch zur Achse 21 eine Aussenkung 15 zur Aufnahme eines Federelements 31, welches mit einer Feststellmutter 3 zusammenwirkt, vorgesehen.
Das Ablageteil 4 ist, wie es insbesondere aus Figur 2, 5 und 6 ersichtlich ist, zweiteilig ausgebildet und besteht aus einer Haube 44 und einem in der Haube 44 durch Ultraschallverschweißung unlösbar angeordneten Ringelement 41. An dem vorstehenden Teil der Haube 44 ist senkrecht zur Achse 21 eine konische Öffnung 45 vorgesehen, die seitlich einen Schlitz 46 aufweist, der so bemessen ist, daß der Brauseschlauch seitlich hindurchgeschoben werden kann, so daß dann die Handbrause mit einem konischen Steckteil in die konische Öffnung 45 zur Halterung einsteckbar ist. An dem Ringelement 41 ist das axial vorstehende Ringsegment 42 angeformt.
Darüber hinaus weist es eine Anlagefläche 47 zur Anlage an die Gleitfläche 12 auf, wobei die Anlagefläche 47 von zwei diametral gegenüberliegenden Ausnehmungen 43 unterbrochen ist.
Der Bolzen 2 ist rohrförmig gestuft ausgebildet, wie es insbesondere aus Figur 2,9 und 10 der Zeichnung zu entnehmen ist. Als Kragen sind im Bereich des größten Durchmessers radial vorstehende Lappen 22 diametral gegenüberliegend angeordnet. In der Mitte des Bolzens 2 sind entsprechend dem Durchmessersprung axial vorkragende Vorsprünge 23 diametral gegenüberliegend ausgebildet, die in der Stecklage die Drehsicherung mit den Nuten 14 in der Durchgangsöffnung 11 der Konsole 1 bewerkstelligen. Am kleinsten Durchmesserbereich, den Lappen 22 gegenüberliegend, ist ein Gewinde 24 auf dem Außenumfang zur Aufnahme der Feststellmutter 3 angeordnet.
Das Federelement 31 besteht aus einer topfförmigen Scheibe 32, in der ein gummielastischer Ring 33 angeordnet ist. Zur guten Halterung und leichten Montage sind an der Innenwandung der topfförmigen Scheibe 32 radial nach innen vorstehende Rippen 34 ausgebildet.
Die Konsole 1, der Bolzen 2, die Feststellmutter 3, die Scheibe 32 und das Ablageteil 4 werden vorzugsweise aus Kunststoff im Spritzgußverfahren hergestellt.

Das Ablageteil 4 kann in folgender Weise mit der Konsole 1 zusammengefügt werden:
Zunächst wird der Bolzen 2 mit seinen Lappen 22 axial durch die Ausnehmungen 43 in das unlösbar an der Haube 44 befestigte Ringelement 41 eingefügt und anschließend verdreht, so daß nunmehr die beiden Lappen 22 an einer Reibfläche 48 des Ringelements 41 anliegen. Hiernach wird das Ablageteil 4 mit dem Bolzen 2 in die Durchgangsöffnung 11 der Konsole 1 eingeschoben, wobei die Vorsprünge 23 zusammen mit den Nuten 14 eine drehfeste, aber axial verschiebliche Verbindung mit der Konsole 1 herstellen. Hiernach kann das Federelement 31 auf den aus der Konsole 1 seitlich vorstehenden Bereich des Bolzens 2 aufgeschoben und anschließend die Feststellmutter 3 auf das Gewinde 24 aufgedreht werden.
In der zusammengefügten Stellung greift das Ringsegment 42 in die Ringsegmentnut 13 in der Konsole 1 ein, wobei diese beiden Elemente so positioniert sind, daß sichergestellt ist, daß im begrenzten Schwenkbereich die Lappen 22 nicht in den Bereich der Ausnehmungen 43 gelangen.
Mit der Feststellmutter 3 kann nunmehr mit Hilfe des Federelements 31 wahlweise die axiale Vorspannung des Bolzens 2 eingestellt werden. Ein Verschwenken der konischen Öffnung 45 mit der eingesteckten Handbrause (in der Zeichnung nicht dargestellt) um die Achse 21 kann somit in einer gewünschten Schwergängigkeit mit Hilfe der Gleitfläche 12 und der Reibfläche 48, gegen die die Lappen 22 des Bolzens 2 axial gedrückt werden, erfolgen. Da der Bolzen 2 drehfest in der Konsole 1 gehaltert ist, kann ein unbeabsichtigtes Lösen der Feststellmutter 3 durch die Schwenkbewegung des Ablageteils 4 nicht eintreten.

## Patentansprüche

1. Wandbrausehalter mit einer an einer Wand befestigbaren Konsole (1), an der ein Handbrauseablageteil (4) um eine Achse (21) begrenzt verschwenkbar vorgesehen ist, derart, daß mit einem drehfest an der Konsole (1) angeordneten Bolzen (2) und einer Feststellmutter (3) das Ablageteil (4) gehalten und die Schwergängigkeit des Verschwenkvorgangs einstellbar ist, dadurch gekennzeichnet, daß in der Konsole (1) eine Durchgangsöffnung (11) parallel zur Wand (5) für eine drehfeste, aber axial verschiebbare Aufnahme des Bolzens (2) vorgesehen ist, wobei einerseits die Feststellmutter (3) auf dem Bolzen (2) gegen eine Stirnseite der Konsole (1) und andererseits der Bolzen (2) mit einem radial vorstehenden Kragen das Ablageteil (4) gegen eine an der anderen Stirnseite ausgebildete Gleitfläche (12) drückt.

2. Wandbrausehalter nach Anspruch 1, dadurch gekennzeichnet, daß das Ablageteil (4) an der der Konsole (1) zugekehrten Stirnseite ein Ringelement (41) trägt, das mit einem axial vorstehenden Ringsegment (42) in eine konzentrisch zur Achse (21) angeordnete Ringsegmentnut (13) der Konsole (1) einfaßt und die Schwenkbewegung begrenzt.

3. Wandbrausehalter nach Anspruch 1 oder 2, dadurch gekennzeichnet, daß in der Durchgangsöffnung (11) zwei gegenüberliegende Nuten (14) ausgebildet sind, in die der Bolzen (2) mit Vorsprüngen (23) in der Stecklage zur drehfesten Halterung geführt ist.

4. Wandbrausehalter nach einem der Ansprüche 1 bis 3, dadurch gekennzeichnet, daß der Kragen von zwei diametral angeordneten Lappen (22) gebildet ist und in dem Ringelement (41) entsprechende Ausnehmungen (43) vorgesehen sind, die ein Zusammenfügen ermöglichen, wobei die Ausnehmungen (43) so angeordnet sind, daß bei eingeführtem Ringsegment (42) in die Ringsegmentnut (13) ein Auseinanderziehen ausgeschlossen ist.

5. Wandbrausehalter nach einem der Ansprüche 1 bis 4, dadurch gekennzeichnet, daß an der der Gleitfläche (12) gegenüberliegenden Stirnfläche der Konsole (1) eine konzentrische Aussenkung (15) zur Aufnahme eines Federelements (31) zum federelastischen Andrücken des Ablageteils (4) gegen die Konsle (1) vorgesehen ist.

6. Wandbrausehalter nach einem der Ansprüche 1 bis 5, dadurch gekennzeichnet, daß das Ringelement (41) in einer Haube (44) des Ablageteils (4) eingeschweißt oder eingeklebt ist.

7. Wandbrausehalter nach einem der Ansprüche 1 bis 6, dadurch gekennzeichnet, daß wenigstens die Konsole (1), der Bolzen (2), das Ablageteil (4) und die Feststellschraube (3) aus Kunststoff hergestellt sind.

## Claims

1. Wall-mounted spray fitting holder having a bracket (1) that can be attached to a wall and on which a holder part (4) for a hand-held spray fitting is provided so as to be pivotable to a limited degree about an axis (21) in such a way that the holder part (4) is held and the stiffness of movement of the pivoting operation can be adjusted by means of a bolt (2), arranged non-rotatably on the bracket (1), and a locking nut (3), characterised in that a passage opening (11) is provided in the bracket (1) parallel to the wall (5) for non-rotatable but axially displaceable reception of the bolt (2), the locking nut (3), on the one hand, pressing on the bolt (2) against one end face of the bracket (1) and, on the other hand, the bolt (2), with a radially projecting collar, pressing the holder part (4) against a sliding surface (12) formed on the other end face.

2. Wall-mounted spray fitting holder according to Claim 1, characterised in that the holder part (4) on the end face turned towards the bracket (1) bears a ring element (41) which engages by means of an axially projecting ring segment (42) in a ring segment-shaped groove (13), arranged concentric with the axis (21), of the bracket (1) and limits the pivoting movement.

3. Wall-mounted spray fitting holder according to Claim 1 or 2, characterised in that in the passage opening (11), two opposed grooves (14) are formed into which the bolt (2) is guided by projections (23) in the fitted position for non-rotatable retention.

4. Wall-mounted spray fitting holder according to one of Claims 1 to 3, characterised in that the collar is formed by two diametrally arranged lugs (22) and in the ring element (41) corresponding recesses (43) are provided which allow assembly, the recesses (43) being so arranged that when the ring segment (42) is introduced into the ring segment-shaped groove (13), pulling apart is no longer possible.

5. Wall-mounted spray fitting holder according to one of Claims 1 to 4, characterised in that on the opposite end face of the bracket (1) from the sliding surface (12) a concentric recess (15) is provided to receive a spring element (31) for spring-resilient pressing of the holder part (4) against the bracket (1).

6. Wall-mounted spray fitting holder according to one of Claims 1 to 5, characterised in that the ring element (41) is welded or adhesively secured in a cap (44) of the holder part (4).

7. Wall-mounted spray fitting holder according to one of Claims 1 to 6, characterised in that at least the bracket (1), the bolt (2), the holder part (4) and the locking screw (3) are produced from plastics material.

## Revendications

1. Porte-douche mural avec une console (1) susceptible d'être fixée à une paroi, et sur laquelle est prévue une partie réceptrice (4) d'une douche portative susceptible de pivoter d'une façon limitée autour d'un axe (21), de façon qu'avec un tourillon (2) disposé fixe en rotation sur la console (1) et un écrou de blocage (3) cette partie réceptrice (4) est maintenue et la dureté du processus de pivotement est susceptible d'être réglée, porte-douche mural caractérisé en ce qu'il est prévu dans la console (1) une ouverture traversante (1) parallèle à la paroi (5) pour un logement fixe en rotation mais susceptible d'être déplacé axialement du tourillon (2), tandis que d'une part l'écrou de blocage (3) sur le tourillon (2) pousse contre une face frontale de la console (1) et d'autre part le tourillon (2) pousse avec une collerette faisant saillie radialement la partie réceptrice (4) contre une surface de glissement (12) prévue sur l'autre face frontale.

2. Porte-douche mural selon la revendication 1 caractérisé en ce que la partie réceptrice (4) porte sur sa face frontale tournée vers la console (1) un élément annulaire (41) qui avec un segment annulaire faisant saillie axialement (42) s'insère dans une gorge en segment annulaire (13) de la console (1) disposé concentriquement par rapport à l'axe (21) et limite le mouvement de pivotement.

3. Porte-douche mural selon la revendication 1 ou la revendication 2 caractérisé en ce que dans l'ouverture traversante (11) sont prévues deux gorges (14) placées l'une en face de l'autre, dans lesquelles le tourillon (2) est guidé par des saillies (23) dans la position d'enfichage pour être maintenu fixe en rotation.

4. Porte-douche mural selon une des revendications 1 à 3 caractérisé en ce que la collerette est constituée par deux pattes (22) disposées diamétralement tandis que dans l'élément annulaire (41) sont prévus des évidements (43) correspondants qui permettent un assemblage, ces évidements (43) étant disposés de façon que lorsque le segment annulaire (42) est engagé dans la gorge du segment annulaire (13) une séparation est exclue.

5. Porte-douche mural selon une des revendications 1 à 4 caractérisé en ce que sur la surface frontale de la console (1) placé en face de la surface de glissement (12) est prévu un évidement concentrique (15) destiné à recevoir un élément élastique (31) pour appliquer élastiquement la partie réceptrice (4) contre la console (1).

6. Porte-douche mural selon une des revendications 1 à 5 caractérisé en ce que l'élément annulaire (41) est soudé ou bien collé dans un capot (44) de la partie réceptrice (4).

7. Porte-douche mural selon une des revendications 1 à 6 caractérisé en ce qu'au moins la console (1), le tourillon (2), la partie réceptrice (4) et l'écrou de blocage (3) sont fabriqués en matière synthétique.
